(19) Europäisches Patentamt

European Patent Office

Office européen des brevets

(11) Veröffentlichungsnummer: **0 287 043 B1**

(12) **EUROPÄISCHE PATENTSCHRIFT**

(45) Veröffentlichungstag der Patentschrift: **03.06.92**

(21) Anmeldenummer: **88105831.7**

(22) Anmeldetag: **13.04.88**

(51) Int. Cl.⁵: **B05B 7/24,** B05B 7/04, B05B 7/26

(54) Pistole für Mehrkomponentenmaterial.

(30) Priorität: **16.04.87 CH 1501/87**

(43) Veröffentlichungstag der Anmeldung:
**19.10.88 Patentblatt 88/42**

(45) Bekanntmachung des Hinweises auf die
Patenterteilung:
**03.06.92 Patentblatt 92/23**

(84) Benannte Vertragsstaaten:
**AT BE CH DE ES FR GB GR IT LI LU NL SE**

(56) Entgegenhaltungen:
**EP-A- 0 063 707
EP-A- 0 132 457
DE-A- 3 518 627
DE-A- 3 624 040
DE-B- 1 034 076**

(73) Patentinhaber: **C. EHRENSPERGER AG
Weierstrasse 11
CH-8712 Stäfa(CH)**

(72) Erfinder: **Volker, Kopp
Säntisstrasse 29
CH-8133 Esslingen(CH)**

(74) Vertreter: **Blum, Rudolf Emil Ernst et al
c/o E. Blum & Co Patentanwälte Vorderberg
11
CH-8044 Zürich(CH)**

**Beschreibung**

Die vorliegende Erfindung betrifft eine Pistole für Mehrkomponentenmaterial.

In der EP-A-63707 ist eine Mehrkomponenten-Spritzpistole beschrieben, die ein Nadelventil zum Ausbringen der Materials aufweist. Die Ventilnadel ist als Hohlnadel ausgebildet und im Pistolengehäuse so angeordnet, dass die eine Komponente an der Aussenseite und die andere Komponente innerhalb der Hohlnadel fliesst. Dabei wirkt die Ventilnadel mit dem Ventilsitz so zusammen, dass in der Geschlossenstellung die Komponenten voneinander getrennt sind und in der Offenstellung die Komponenten als koaxial fliessende Ströme ausgetragen und gleichzeitig gemischt werden. Das Volumenverhältnis der Komponenten wird durch Verdrängerpumpen bestimmt.

Bei dieser Spritzpistole erweist es sich als nachteilig, dass das Volumenverhältnis der Komponenten nicht geändert werden kann, und dass eine Reinigung der Hohlnadel nicht vorgesehen ist.

Aus der EP-A 132 457 ist ein Teilesatz für Mehrkomponentenerzeugnisse bekannt, bei der zwei Druckbehälter, die die Komponenten des Materials beinhalten, in einem Gestell angeordnet sind und über Schläuche mit einer Abgabedüse verbunden sind. Am Gestell sind Mittel vorhanden, mit denen die Ventile der Druckbehälter betätigbar sind. Die Abgabedüse ist in einem Gehäuse angeordnet, in dem gleichzeitig Absperrmittel untergebracht sind, um den Materialdurchfluss durch die Schläuche zu stoppen.

Die Nachteile dieses Teilesatzes sind im wesentlichen darin zu sehen, dass die Komponenten über Schläuche der Abgabedüse zugeführt werden, dass die Dosierung über einen Quetschvorgang an den Schläuchen erfolgt, dass die Anordnung unhandlich und sehr aufwendig zu bedienen ist, und dass nach dem Ausbringen Teile des Satzes weggeworfen werden müssen.

Die mit der Erfindung zu lösende Aufgabe besteht darin, eine Pistole zum Ausbringen eines Mehrkomponentenmaterials zu schaffen, bei der das Volumenverhältnis der als koaxial ineinanderfliessende Ströme ausgebrachten und gleichzeitig gemischten Materialkomponenten einstellbar ist.

Diese Aufgabe wird erfindungsgemäss mit den Merkmalen des Patentanspruches 1 gelöst.

Als vorteilhaft erweist sich hierbei, dass die Dosiernadel ebenfalls als Reinigungsnadel benutzt werden kann.

Bei einem Ausführungsbeispiel sind die Anschlussvorrichtungen in Austragrichtung gesehen im Abstand zueinander im Gehäuse feststehend angeordnet und derart ausgebildet, dass die mit einem Kupplungsglied versehenen Druckbehälter unter gleichzeitiger Oeffnung des Ventils in die Anschlussvorrichtung eingeschraubt sind.

Die Vorteile dieser Pistole bestehen darin, dass die Druckbehälter einhändig aufschraubbar sind und die Pistole damit einsatzbereit ist.

Es ist vorteilhaft, wenn bei einer Pistole mit Griff die Druckbehälter und der Griff in entgegengesetzten Richtungen vom Gehäuse abstehen und die Druckbehälter und der Griff in der gleichen Ebene liegen. Dadurch ergibt sich eine weitgehend ausbalancierte Pistole, die sich besonders zur Einhand-Bedienung eignet.

Durch das Aufstecken eines Mundstückes auf die Abgabedüse wird eine erweiterte Mischkammer gebildet. Wird als Mundstück ein Kunststoffschlauch verwendet, so wirkt dieser in vorteilhafter Weise als statischer Mischer, wodurch eine Zwangsmischung nicht erforderlich ist.

Im folgenden wird die Erfindung anhand der beiliegenden Zeichnungen erläutert.

Es zeigen:

Figur 1 einen Schnitt durch ein Ausführungsbeispiel der erfindungsgemässen Pistole,

Figur 2 einen Teil des in Figur 1 gezeigten Ausführungsbeispiels im vergrösserten Massstab.

Figur 3 einen Schnitt entlang der Linie III-III in Figur 2,

Figur 4 eine Draufsicht auf einen Abschnitt der Dosiervorrichtung, und

Figur 5 einen Schnitt entlang der Linie V-V in Figur 4.

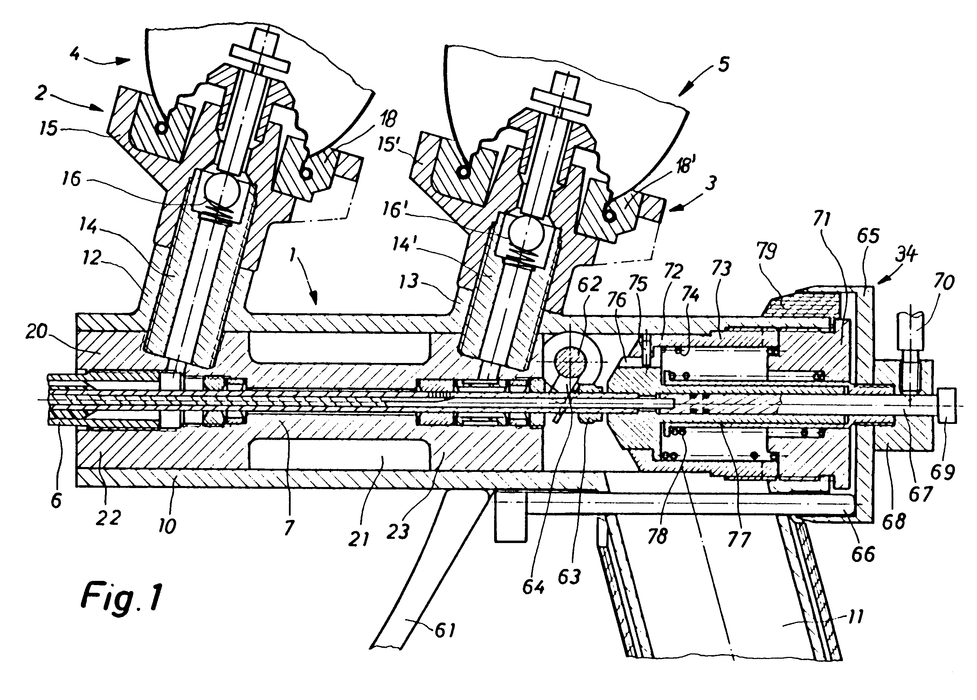

Die Figur 1 zeigt eine Pistole zum Ausbringen von 2-Komponentenmaterial, z.B. Polyurethanschaum. Die Pistole umfasst im wesentlichen ein Gehäuse 1 in der typischen Pistolenform, zwei Anschlussvorrichtungen 2,3 zum Zuführen des Materials, zwei Druckbehälter 4,5, die die Komponenten des Materials beinhalten, eine Abgabedüse 6 und eine Dosiervorrichtung 7, um die Komponenten des Materials in einem vorgegebenen Volumenverhältnis an der Abgabedüse 6 abzugeben.

Das Gehäuse 1 der Pistole hat einen zylinderförmigen-Abschnitt 10 und einen Griff 11, der in Austragrichtung gesehen am hinteren Teil des Abschnittes 10 einstückig mit diesem ausgebildet ist. Am Gehäuseabschnitt 10 sind zwei Ansätze 12,13 ausgebildet, die in Austragrichtung gesehen hintereinanderliegend angeordnet sind. Dabei liegen die Mittellinien des Griffes 11, des Gehäuseabschnittes 10 und der Ansätze 12,13 in einer Ebene, so dass die Pistole ausbalanciert ist, um die Einhandbedienung zu ermöglichen. Die Anschlüsse 12,13 sind mit einem Gewindeloch versehen, in die jeweils eine Anschlussvorrichtung 2,3 eingeschraubt ist.

Die Anschlussvorrichtungen 2,3 weisen die gleiche Form, aber unterschiedliche Abmessungen auf. Wie Figur 1 zeigt, bestehen die Anschlussvorrichtungen jeweils aus einer Gewindehülse 14,14', die in die Ansätze 12,13 eingeschraubt ist, einem Adapterteil 15,15', der auf die Gewindehülse 14,14' aufgeschraubt ist, und einem Rückschlagventil 16,16', das zwischen der Gewindehülse 14,14' und dem Adapterteil 15,15' montiert ist, um den Einlass bei abgenommenen Druckbehältern gegen die Atmosphäre abzusperren.

Die Druckbehälter 4, 5 sind bekannt und in der Ausführung dem darin enthaltenen Produkt angepasst. Bei dem hier in Rede stehenden Erfindungsgegenstand sind die Druckbehälter 4, 5 zusätzlich mit einem Kupplungsteil 18, 18' versehen. Der Kupplungsteil kann, wie in Figur 1 gezeigt, einteilig als Gewindering mit Aussengewinde, der am Rand des Druckbehälters befestigt ist, oder mehrteilig sein; der auf den Rand aufsetzbar ist, wie in der DE-OS 35 18 627 beschrieben ist.

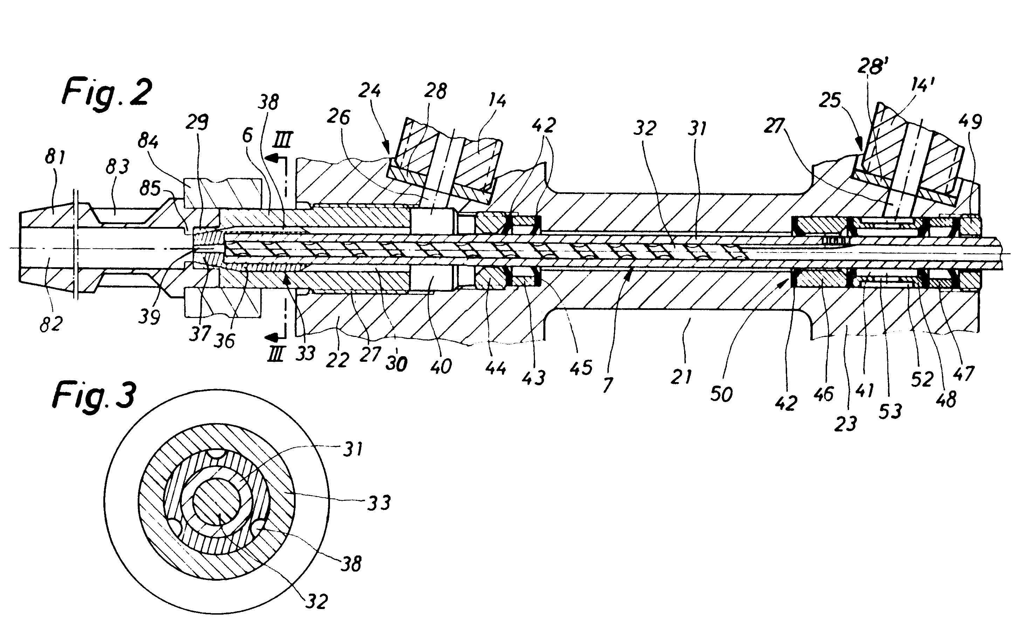

Im Gehäuseabschnitt 10 ist bündig mit dessen Vorderkante ein im wesentlichen zylindrisches Organ 20 mit zwei durch eine Ausdehnung 21 gebildeten Abschnitten 22, 23 montiert, wobei die Abschnitte 22, 23 am Umfang an der Innenfläche des Gehäuseabschnittes 10 anliegen. Wie aus Figur 2 ersichtlich ist, sind in den Abschnitten 22, 23 jeweils eine Ausbohrung 24, 25, in die die Gewindehälsen 14, 14' der Anschlussvorrichtungen 2, 3 hineinragen, und Bohrungen 26, 27 zum Einlassen der Komponenten des Materials ausgebildet. Zwischen den Gewindehülsen 14, 14' und dem Organ 20 sind Dichtungsscheiben 28, 28' angeordnet.

Wie Figure 2 zeigt, ist die Abgabedüse 6 als einteiliger Körper ausgebildet. Der Düsenkörper ist an der Frontseite der Pistole in das Organ 20 in eine Gewindebohrung eingeschraubt, die einen Abschnitt eines sich durch das Organ 20 erstreckenden Durchgangsloches ist. Hierzu hat der Düsenkörper an einem Ende ein zur Gewindebohrung passendes Aussengewinde 27. Am anderen Ende ist ein Ansatz 29 angeformt, der die Mündung darstellt. Der Düsenkörper hat eine Bohrung 30 mit einem konischen Abschnitt, der sich zur Mündung hin verjüngt und die erste Auslassöffnung für die eine Komponente des Materials bildet. In diese Bohrung 30 ragt die Dosiervorrichtung 7 hinein, die neben der Dosierfunktion auch die Austragfunktion erfüllt, d.h. sie ist als Düsennadel ausgebildet.

Die Dosiervorrichtung 7 umfasst eine Hohlnadel 31, eine Dosiernadel 32 und einen Verschlussteil 33. Die Dosiervorrichtung steht mit einer Betätigungsvorrichtung 34 in Verbindung, die später beschrieben wird (Figur 1). Die Dosiernadel 32 ist innerhalb der Hohlnadel 31 beweglich angeordnet. Der Verschlussteil 33 hat einen zylindrischen Abschnitt 36, dessen Aussendurchmesser dem Innendurchmesser der Bohrung 30 im Düsenkörper angepasst ist und einen konischen Abschnitt 37, der an den konischen Abschnitt der Bohrung 30 im Düsenkörper angepasst ist. Wie aus der Figur 3 ersichtlich ist, sind am Umfang des zylindrischen Abschnittes 36 des Verschlussteiles 33 Rillen 38 ausgebildet. Im konischen Abschnitt 37 des Verschlusteiles 33 ist eine konische Bohrung ausgebildet, die sich zur Mündung hin verjüngt und die zweite Auslassöffnung für die andere Komponente des Materials bildet. In diese konische Bohrung ragt ein an einem Ende der Dosiernadel 32 ausgebildeter Abschnitt 39 hinein.

Um die Dichtung zwischen dem Düsenkörper 6 und Verschlussteil 33 bzw. zwischen dem Verschlusteil 33 und der Dosiernadel 32 zu gewährleisten, wird der Verschlussteil 33 mit Vorteil aus einem elastisch verformbaren Material z.B. Kunststoff hergestellt.

Der Verschlussteil 33 kann aber auch aus einem starren Material, z.B. Metall, Keramik usw. hergestellt sein.

In dem Organ 20 sind im Bereich der Einlassbohrungen 26, 27 im Gehäuse 10 eine erste und zweite Kammer 40, 41 vorgesehen, in die die jeweilige Komponente des Materials einströmt.

Die erste Kammer 40 wird einerseits durch den Düsenkörper 6 und andererseits durch eine Dichtungsanordnung bestimmt. Die Dichtungsanordnung besteht aus zwei Lippendichtungen 42, die am Umfang der Hohlnadel 31 anliegen, und einer Abstandshülse 43, die die Lippendichtungen 42 im Abstand zueinander hält. Diese Anordnung wird durch einen Gewindering 44 gegen eine im Durchgangsloch des Organs 20 ausgebildete erste Schulter 45 gepresst und gehalten. Bei dieser Anordnung steht die erste Kammer 40 über die Einlassbohrung 26 mit der Anschlussvorrichtung 2 und über die Bohrung 29 im Düsenkörper und die Rillen 38 im Verschlussteil 33 mit der ersten Auslassöffnung in Verbindung. Die zweite Kammer 41 wird ebenfalls durch eine Dichtungsanordnung gebildet, die in einem weiteren Abschnitt des Durchgangsloches im Organ 20 angeordnet ist. Die Dichtungsanordnung setzt sich aus zwei Gruppen, die jeweils zwei Lippendichtungen 42, die am Umfang der Hohlnadel 31 anliegen, und eine Abstandshülse 46 bzw. 47 aufweisen, die die Lippendichtungen 42 auf Abstand zueinander halten, und aus einem Abstandshalter 48 zusammen, der zwischen den Gruppen angeordnet ist. Die Dichtungsanordnung wird durch einen Gewindering 49 gegen eine im Durchgangsloch des Organs 20 ausgebildete zweite Schulter 50 gepresst und gehalten. Der Abstandshalter 48 ist am Umfang mit einer ringförmigen Ausnehmung 52 und einer Anzahl von Löchern 53 versehen, so dass die entsprechende Komponente des Materials in die Kammer 41 einströmen kann.

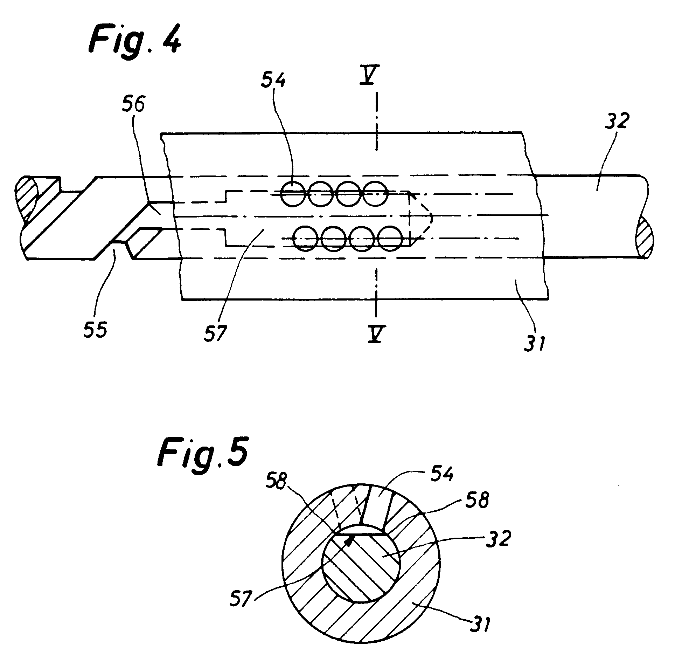

Wie die Figuren 4 und 5 zeigen, ist die Hohlnadel 31 mit einer Mehrzahl von radialen Bohrungen 54 versehen, die bei Betätigung der Dosiervorrichtung 7 mindestens teilweise in die zweite Kammer 41 verschiebbar sind (Figur 1). Die Dosiernadel 32 weist eine wendelförmige Rille 55 auf. An diese Rille 55 schliesst sich eine gerade Rille 56 an, die sich in axialer Richtung erstreckt und einen Zulaufkanal bildet. Daran anschliessend ist ein ebener Abschnitt 57 ausgebildet, der sich bis zu den Bohrungen 54 in der Hohlnadel erstreckt, wenn die Dosiernadel 32 vollständig in die Hohlnadel 31 eingeführt ist. Bei dieser Anordnung steht die zweite Kammer 41 über die Bohrungen 54 in der Hohlnadel 31 den ebenen Abschnitt 57 der geraden Rille 56 und die wendelförmige Rille 55 mit der zweiten Auslassöffnung in Verbindung. Durch den ebenen Abschnitt 57 ergeben sich zwei Kanten 58, die parallel zueinander verlaufen und zur Steuerung des Durchflusses verwendet werden, wie später erläutert wird.

Die vorstehend beschriebene Dosiernadel 32 weist nur eine Rille 55 und einen Abschnitt 57 auf. Es ist von Vorteil, wenn für die Dosiernadel 32 zwei Rillen, d.h. einer Doppelwendel und zwei Abschnitte vorgesehen werden, die einander gegenüberliegend ausgebildet sind, und die Hohlnadel 31 mindestens zwei Bohrungen aufweist, die auf einer durch das Zentrum verlaufenden Linie einander gegenüberliegend ausgebildet sind.

Die Betätigungsvorrichtung 34 hat einen Abzughebel 61, der im Bereich des Griffes 11 angeordnet ist. Der Abzughebel 61 ist mit einer Welle 62 verbunden, die im Gehäuseabschnitt 10 gelagert ist. Die Betätigungsvorrichtung 34 umfasst einen Stellring 63, der auf der Hohlnadel 31 angeordnet ist, und einen Nocken 64, der an der Welle 62 befestigt ist und an den Stellring 63 anliegt, um die Hohlnadel 31 zurückzuziehen, wenn der Nocken 64 zusammen mit dem Abzughebel 61 in Richtung des Griffes 11 verschwenkt wird, und umfasst ferner eine Kappe 65, die mit der Dosiernadel 32 verbunden ist, und einen Stellstift 66, der einerseits am Abzughebel 61 und andererseits an der Innenseite der Kappe 65 anliegt, um die Dosiernadel 32 zurückzuziehen, wenn der Abzughebel 61 in Richtung des Griffes 11 verschwenkt wird. Am Ende der Dosiernadel 32 ist ein Verlängerungsteil 67 befestigt, der sich durch die Kappe 65 und einen Stellring 68 erstreckt und der mit einem Griffteil 69 versehen ist, mit dem die Dosiernadel 32 manuell betätigt werden kann. Die Verbindung der Dosiernadel 32 mit der Kappe 65 erfolgt über eine Stellschraube 70, die im Stellring 68 vorgesehen ist. Der Stellstift 66 ist ausserhalb des Gehäuseabschnittes 10 im Griff 11 geführt. Wie aus der Figur 1 ersichtlich, ist die Welle 62 im Gehäuseabschnitt 10 so gelagert, dass der Drehpunkt für den Nocken 64 und den Abzughebel 61 oberhalb der Mittelachse des Gehäuseabschnittes 10 und über der Hohlnadel 31 liegt. Somit ergeben sich ausgehend vom Drehpunkt verschiedene Abstände zu den Anlagepunkten von Stellring 63 und Nocken 64 bzw. Abzughebel 61 und Stellstift 66. Dadurch ergeben sich für die Hohlnadel 31 und die Dosiernadel 32 unterschiedliche Verstellängen. Beim vorstehend beschriebenen Ausführungsbeispiel sind die Verstellänge für die Hohlnadeln und für die Dosiernadel im Verhältnis ca. 1:3 ausgelegt.

Der Hohlnadel 31 und der Dosiernadel 32 ist ein Rückstellmechanismus zugeordnet, der die Nadeln in eine Ruhestellung drückt, in der die Auslassöffnungen am Düsenkörper 6 bzw. am Verschlussteil 33 geschlossen sind. Am hinteren Ende des Gehäuseabschnittes 10 ist ein Gewindestopfen 71 eingeschraubt, der den Gehäuseabschnitt 10 gleichzeitig abschliesst. Der Rückstellmechanismus für die Hohlnadel 31 umfasst einen Führungsteil 72, der am Ende der Hohlnadel 31 befestigt und auf dem Verlängerungsteil 67 der Dosiernadel 32 verschiebbar angeordnet ist, eine Haltebüchse 73 für Führungsteil 72, die im Gehäuseabschnitt 10 einge schraubt ist, und eine Rückstellfeder 74, die als Druckfeder ausgebildet und zwischen dem Führungsteil 72 und dem Gewindestopfen 71 angeordnet ist. In der Haltebüchse 73 ist ein Stift 75 vorgesehen, der in einen Schlitz 76 am Führungsteil 72 eingreift, um den Führungsteil gegen Verdrehen zu sichern.

Der Rückstellmechanismus für die Dosiernadel 32 umfasst ein Führungsorgan 77, das im Gewindestopfen 71 zugeführt und mit der Kappe 65 verbunden ist, und eine Rückstellfeder 78, die als Druckfeder ausgebildet und zwischen dem Führungsorgan 77 und dem Gewindestopfen 71 angeordnet ist. Am hinteren Ende des Gehäuses 10 ist ferner eine Skala 79 angeordnet.

Wie Figur 2 zeigt, ist auf dem Ansatz 37 der Abgabedüse 6 ein Mundstück 81 aufgesetzt, das durch einen auf der Abgabedüse 6 angeordneten Stützring 84 gesichert ist. Das Mundstück 81 weist eine Bohrung 82 auf, die eine erweiterte Mischkammer bildet und durch einen ringförmigen Vorsprung 85 begrenzt wird. Der ringförmige Vorsprung 85 bildet gleichzeitig eine Schulter, die beim Aufstecken des Mundstückteils 81 als Anschlag dient. In dem Mundstück 81 sind Einkerbungen 83 ausgebildet, die als Sollbruchstelle dienen und beim Verstopfen des Mundstückes zerstört werden. Ferner wird in vorteilhafter Weise verhindert, dass bei einem Bedienungsfehler oder Defekt die über die erste Kammer 40 zugeführte Komponente des Materials bei geöffneter Abgabedüse 6 über die Rille in der Dosiernadel nicht bis in die zweite Kammer 41 gedrückt wird und das Material aushärtet.

Um 2-Komponentenmaterial mit der vorstehend beschriebenen Pistole auszubringen, wird folgendermassen vorgegangen.

Zuerst werden die Druckbehälter 4, 5, die die Komponenten des Materials beinhalten in die Anschlussvorrichtungen 2, 3 eingeschraubt. Dabei wird die Pistole mit einer Hand gehalten und die Druckbehälter 4, 5 mit der anderen Hand nacheinander eingeschraubt. Mit dem Einschrauben der Druckbehälter werden gleichzeitig deren Ventile geöffnet. Dadurch strömt die eine Komponente über die eine Anschlussvorrichtung 2 mit dem geöffneten Rückschlagventil, die Einlassöffnung 26 in die erste Kammer 40 und von dort in die Bohrung 29 und die Rillen 38. Die andere Komponente strömt über die andere Anschlussvorrichtung 3 mit geöffnetem Rückschlagventil, die Einlassbohrung 27, die Löcher im Abstandshalter in die zweite Kammer 41. Damit ist die Pistole für das Ausbringen bereit.

Das Ausbringen wird durch Verschwenken des Abzughebels in Richtung des Griffes ausgelöst. Mit der Schwenkbewegung des Abzughebels werden die Hohlnadel und die Dosiernadel gleichzeitig gegen die Wirkung des ersten und zweiten Rückstellmechanismus verschoben. Durch die unterschiedlichen Distanzen zwischen dem Drehpunkt des Abzughebels und den Auslösepunkten für die Verschiebung der Hohlnadel bzw. der Dosiernadel ist die Verschiebelänge für die Hohlnadel kürzer als für die Dosiernadel. Durch die Verschiebung der Hohlnadel wird der konische Abschnitt des Verschlussteiles aus dem Düsenkörper gezogen und die Bohrungen in der Hohlnadel in die zweite Kammer eingeführt. Dadurch strömt die andere Komponente des Materials in die wendelförmige Rille der Dosiernadel bis zum konischen Abschnitt des Verschlussteiles. Durch die proportional längere Verschiebung der Dosiernadel wird gewährleistet, dass beide Komponenten des Materials etwa gleichzeitig aus der ersten und zweiten Auslassöffnung austreten. Die Mischung beider Komponenten des Materials wird durch die koaxiale Anordnung der ersten und zweiten Auslassöffnung bewirkt und das dadurch verursachte Ineinanderfliessen der Ströme bewirkt. Das aus der Abgabedüse ausströmende Material strömt in das Mundstück, in dem eine Feindurchmischung der Komponenten erfolgt.

Das Ausbringen wird unterbrochen, wenn man den Abzughebel freigibt. Dadurch werden die Hohl- und Dosiernadel durch den ersten und zweiten Rückstellmechanismus in Richtung der Abgabedüse verschoben, wodurch die erste und zweite Auslassöffnung geschlossen werden. Da der Verschlussteil aus elastisch verformbarem Material besteht, wird durch den konischen ansatz der Dosiernadel der konische Abschnitt des Verschlussteiles zusätzlich gegen den konischen Abschnitt der Bohrung des Düsenkörpers gedrückt, wodurch die Dichtung in besonders vorteilhafter Weise verbessert wird.

Sind die Druckbehälter leer, werden diese aus den Anschlussvorrichtungen herausgeschraubt. Die Rückschlagventile sperren dann die Einlasskanäle ab. Dadurch können die Druckbehälter von der Pistole abgenommen werden, ohne dass negative Einflüsse auf das Material innerhalb der Spritzpistole einwirken können.

Das Volumenverhältnis der beiden Komponenten kann verändert werden, indem man die Dosiernadel bezüglich der Hohlnadel verdreht. Dadurch kann mittels der durch den ebenen Abschnitt gebildeten Kanten an der Dosiernadel die lichte Weite der Bohrungen in der Hohlnadel, d.h. die Durchlassöffnung für die Komponente verändert werden.

Eine Reinigung der Pistole, d.h. der Hohlnadel lässt sich auf einfache Weise bewerkstelligen, indem man die Dosiernadel aus der Pistole nach hinten herauszieht, putzt und wieder einführt, um in vorteilhafter Weise von der Mündung zurückgeströmtes Material entfernen zu können. Durch Einschrauben von neuen Druckbehältern ist die Pistole für das Ausbringen bereitgestellt.

Beim beschriebenen Ausführungsbeispiel erfolgt die Auslösung der Verschiebung der Hohl- und Dosiernadel gleichzeitig. Durch die Ausbildung von Hohlnadel und Stellring sowie des Stellstiftes kann in vorteilhafter Weise die Auslösung der Verschiebung für die Hohl- und Dosiernadel zeitlich verzögert erfolgen.

**Patentansprüche**

1. Dosierpistole zum Ausbringen eines Mehrkomponentenmaterials, mit einem Gehäuse, mit Druckbehältern, die ein Ventil haben und die Komponenten des Materials enthalten, mit einer Dosiervorrichtung, um die Komponenten des Materials in vorgegebenen Volumenverhältnissen abzugeben, mit Anschlussvorrichtungen, die am Gehäuse angeordnet sind und die Druckbehälter mit der Dosiervorrichtung verbinden, und mit einer Abgabedüse, wobei die Dosiervorrichtung (7) als Düsennadel für die Abgabedüse (6) ausgebildet ist und mindestens eine Hohlnadel (31) aufweist, die bezüglich der Abgabedüse (6) verschiebbar angeordnet ist, so dass die Komponenten des Materials über die Aussenseite bzw. die Innenseite der Hohlnadel (31) der Abgabedüse (6) zugeführt und an der Abgabedüse (6) als koaxiale, ineinanderfliessende Materialströme abgegeben werden, wobei die Dosiervorrichtung (7) ferner eine in der Hohlnadel (31) angeordnete Dosiernadel (32) aufweist, die bezüglich der Hohlnadel (31) verschiebbar ist, um eine gleichbleibende Menge der Komponente des Materials der Abgabedüse (6) zuzuführen, und die bezüglich der Hohlnadel (31) drehbar ist, um die der Abgabedüse (6) zugeführte Menge einzustellen.

2. Pistole nach Anspruch 1, dadurch gekennzeichnet, dass die Anschlussvorrichtungen (2, 3) in Austragrichtung gesehen im Abstand zueinander am Gehäuse (1) feststehend angeordnet und derart ausgebildet sind, dass die mit einem Kupplungsteil (18) versehenen Druckbehälter (4, 5) unter gleichzeitiger Oeffnung des Ventils in die Anschlussvorrichtungen eingeschraubt sind.

3. Pistole nach Anspruch 2, dadurch gekennzeichnet, dass die Druckbehälter (4, 5) in der gleichen Richtung vom Gehäuse (1) abstehen.

4. Pistole nach Anspruch 2, dadurch gekennzeichnet, dass die Druckbehälter (4, 5) in entgegengesetzten Richtungen vom Gehäuse (1) abstehen.

5. Pistole nach einem der Ansprüche 2-4, dadurch gekennzeichnet, dass ein Griff (11) am Gehäuse (1) vorgesehen ist.

6. Pistole nach einem der Ansprüche 2-4, dadurch gekennzeichnet, dass ein Druckbehälter (4, 5) als Griff ausgebildet ist.

7. Pistole nach einem der Ansprüche 3 oder 4, dadurch gekennzeichnet, dass die Druckbehälter (4, 5) in der gleichen Ebene liegen.

8. Pistole nach einem der Ansprüche 3 oder 4 mit einem Griff, dadurch gekennzeichnet, dass die Druckbehälter (4, 5) und der Griff (11) in entgegengesetzten Richtungen vom Gehäuse (1) abstehen, und dass die Druckbehälter (4, 5) und der Griff (11) in der gleichen Ebene liegen.

9. Pistole nach Anspruch 2, dadurch gekennzeichnet, dass ein Rückschlagventil (16, 16') in den Anschlussvorrichtungen (2, 3) vorgesehen ist.

10. Pistole nach Anspruch 1, dadurch gekennzeichnet, dass die Druckbehälter (4, 5) 2-Kammer-Dosen sind.

11. Pistole nach Anspruch 1, dadurch gekennzeichnet, dass die Hohlnadel (31) am Endabschnitt mit einem Verschlussteil (33) versehen ist, der an der Abgabedüse (6) anliegt und eine Bohrung hat, und dass die Dosiernadel (32) am Endabschnitt einen Ansatz (39) aufweist, der in die Bohrung im Verschlussteil (33) eingreift.

12. Pistole nach Anspruch 11, dadurch gekennzeichnet, dass der Verschlussteil (33) aus elastisch verformbarem oder starrem Material besteht.

13. Pistole nach Anspruch 1, dadurch gekennzeichnet, dass die Dosiernadel (32) mindestens eine wendelförmige Rille (55) hat, die sich ausgehend vom Ende über eine vorgegebene Länge der Dosiernadel (32) erstreckt und einen Kanal zum Zuführen einer Komponente des Materials bildet, und dass die Hohlnadel (31) mindestens eine Oeffnung (54) aufweist, die sich radial durch mindestens eine Wand der Hohlnadel (31) erstreckt, um die Komponente des Materials in den Kanal der Dosiernadel einzuführen.

14. Pistole nach Anspruch 13, dadurch gekennzeichnet, dass die Hohlnadel (31) mehrere Oeffnungen (54) aufweist, die in Reihen angeordnet sind (Figur 4).

15. Pistole nach Anspruch 13, dadurch gekennzeichnet, dass ein ebener Abschnitt (57) ausgebildet ist, der sich in Längsrichtung über eine vorgegebene Länge der Dosiernadel (32) erstreckt, dass die Dosiernadel (32) in der Hohlnadel (31) so angeordnet ist, dass der ebene Abschnitt (57) unterhalb des Loches (54) angeordnet ist, und dass die Dosiernadel (32) in der Hohlnadel (31) drehbar angeordnet ist, um mit der durch den ebenen Abschnitt (57) am Umfang der Dosiernadel (32) gebildeten Kanten (58) die lichte Weite der Oeffnung (54) zur Steuerung der Durchflussmenge zu ändern.

16. Pistole nach Anspruch 1, gekennzeichnet durch eine Betätigungsvorrichtung (34), um die Hohl-und Dosiernadel (31, 32) gemeinsam aus einer Ruhestellung in eine Arbeitsstellung zu stellen, und durch einen ersten und zweiten Rückstellmechanismus, um die Hohlnadel (31) und die Dosiernadel (32) einzeln aus der Arbeitsstellung in die Ruhestellung zurtickzustellen.

17. Pistole nach Anspruch 16, dadurch gekennzeichnet, dass die Betätigungsvorrichtung (34) einen am Gehäuseabschnitt (10) schwenkbar angeordneten Abzughebel (61) und Mittel (63, 64; 65, 66) aufweist, um die Schwenkbewegung des Abzughebels (61) in eine lineare Bewegung für die Nadeln so umzuwandeln, dass die Verschiebelänge für die Dosiernadel (32) grösser ist als für die Hohlnadel (31).

**18.** Pistole nach Anspruch 17, dadurch gekennzeichnet, dass die Mittel verstellbar sind, um die Verschiebelängen der Hohl- und Dosiernadel (31, 32) einzustellen.

**19.** Pistole nach Anspruch 18, dadurch gekennzeichnet, dass die Mittel verstellbar sind, um die Hohl-und Dosiernadel (31, 32) zeitlich verzögert zu verschieben.

**20.** Pistole nach Anspruch 16, dadurch gekennzeichnet, dass am hinteren Ende des Gehäuseabschnittes (10) eine Skala (79) angeordnet ist, um die Stellung der Dosiervorrichtung (7 ) zur Abgabedüse (6) anzuzeigen.

**21.** Pistole nach Anspruch 1, dadurch gekennzeichnet, dass der erste und zweite Rückstellmechanismus eine Feder (74, 78) aufweisen, die die Hohlnadel (31) und Dosiernadel (32) jeweils in die Ruhestellung zurückstellen.

**22.** Pistole nach Anspruch 1, gekennzeichnet durch ein Mundstück (81), das auf der Abgabedüse (6) aufgesteckt ist, und eine erweiterte Mischkammer (82) bildet.

**23.** Pistole nach Anspruch 22, dadurch gekennzeichnet, dass das Mundstück (81) am Umfang mit Einkerbungen (83) versehen ist, die eine Sollbruchstelle bilden, um ein Verstopfen des Mundstückes (81) anzuzeigen.

**24.** Pistole nach Anspruch 22, dadurch gekennzeichnet, dass das Mundstück (81) ein Kunststoffschlauch ist.

## Claims

**1.** Dosage gun for discharging a multi-component material, with a housing, with pressure tanks having a valve and containing the components of the material, with a dosing device for discharging the components in a predetermined volume ratio, with connection devices arranged to the housing and connecting the pressure tanks with the dosing device and with an emission nozzle, wherein the dosing device (7) is formed as a nozzle needle for the emission nozzle (6) and contains at least a hollow needle (31) movably arranged in relation to the emission nozzle (6) so that the components of material are fed along the exterior periphery and inside of the hollow needle (31), respectively, of the emission nozzle (6) and the components are dispensed at the emission nozzle (6) as coaxial streams flowing into each other, wherein the dosing device includes further a dosage needle (32) arranged in the hollow needle, the dosage needle being movable in relation to the hollow needle in order to feed a uniform amount of the component of the material to the emission nozzle (6) and being rotatable in relation to the hollow needle (31) in order to adjust the amount fed to the emission nozzle (6).

**2.** Gun according to claim 1, characterized in that the connection devices (2, 3) are arranged in a stationary manner on the housing and spaced to each other in the direction of discharge and so designed that the pressure tanks (4, 5) provided with a coupling part (18) are threaded into the connection devices simultaneously with an opening of the discharge valve.

**3.** Gun according to claim 2, characterized in that the pressure tanks (4, 5) extend in the same direction from said housing (1).

**4.** Gun according to claim 2, characterized in that the pressure tanks (4, 5) extend in opposite directions from said housing (1).

**5.** Gun according to one of the claims 2-4, characterized in that a handle (11) is provided on said housing (1).

**6.** Gun according to one of the claims 2-4, characterized in that one pressure tank (4, 5) is designed as a handle.

**7.** Gun according to one of claims 3 or 4, characterized in that the pressure tanks (4, 5) lie in the same plane.

**8.** Gun according to one of claims 3 or 4, characterized in that the pressure tanks (4, 5) and said handle (11) extend in opposing directions from said housing (1), and that the pressure tanks (4, 5) and the handle (11) lie in the same plane.

**9.** Gun according to claim 2, characterized in that the connection devices (2, 3) each comprises a recoil valve (16, 16').

**10.** Gun according to claim 1, characterized in that the pressure tanks (4, 5) are two chamber cans.

**11.** Gun according to claim 1, characterized in that the hollow needle (31) is provided at the end section with a closing part (33) that lies against said emission nozzle (6), said closing part having a bore, and that the dosage needle (32) has at one end thereof an added piece which engages in said bore in said closing part (33).

12. Gun according to claim 11, characterized in that the closing part (33) consists of elastically deformable material or a rigid material.

13. Gun according to claim 1, characterized in that the dosage needle (32) has at least one spiral groove (55) which extends, starting from one end over a predetermined length of the dosage needle (32) and forms a channel for the feeding of one component of the material, and that the hollow needle (31) has at least one opening (54) which extends radially through at least one wall of said hollow needle (31) to feed the components of the material into the channel of the dosage needle.

14. Gun according to claim 13, characterized in that the hollow needle (31) has several openings (54) which are arranged in rows (Fig. 4).

15. Gun according to claim 13, characterized in that the dosage needle has a level section (57) which extends lengthwise over a predetermined length of the dosage needle (32), that the dosage needle (32) is so arranged in said hollow needle (31) that the level section (57) is disposed below said opening, and that the dosage needle (32) is arranged rotatably in said hollow needle (31) in order to vary, through edges (58) formed through level section (57) on the circumference of said dosage needle (32), the inner diameter of the opening for control of the amount of material flowing therethrough.

16. Gun according to claim 1, comprising an actuation device (34) for moving said hollow needle and dosage needle (31, 32) together from a rest position into a working position and first and second reset mechanisms to reset said hollow needle (31) and said dosage needle (32) singly from the working position to the rest position.

17. Gun according to claim 6, characterized in that the actuation device (34) comprises a trigger (61) which is rotatably arranged on the housing section (10) and a means (63, 64, 65, 66) for converting a rotating movement of the trigger (61) into a linear movement for the needles so that a length of movement for the dosage needle (32) is greater than for the hollow needle (31).

18. Gun according to claim 17, characterized in that the means are adjustable in order to adjust the respective lengths of movement of said hollow needle and dosage needle (31, 32).

19. Gun according to claim 18, characterized in that the means are adjustable in order to move said hollow needle and dosage needle (31, 32) with a time delay.

20. Gun according to claim 16, characterized in that a scale (79) provided on a rear end of said housing section (10) for indicating the position of said dosage device (7) in relation to said emission nozzle (6).

21. Gun according to claim 1, characterized in that the first and second set back mechanisms include a spring (74, 78) that sets back a respective one of said hollow needle (31) and said dosage needle (32) into the rest position.

22. Gun according to claim 1, comprising a mouthpiece (81) which is placed on said emission nozzle (6) and forms a widened mixing chamber 882).

23. Gun according to claim 22, characterized in that the mouthpiece (81) is provided on its circumference with notches (83) which form an intentional breakpoint in order to indicate a stopping up of said mouthpiece (81).

24. Gun according to claim 22, characterized in that the mouthpiece (81) is a hose of plastic.

**Revendications**

1. Pistolet doseur destiné au transfert d'un matériau à plusieurs composants, avec un boîtier et des réservoirs sous pression possédant une valve et contenant les composants du matériau, avec un dispositif de dosage destiné à libérer les composants du matériau dans des proportions volumiques données, avec dispositifs de raccordement disposés sur le boîtier et reliant le dispositif de dosage aux réservoirs sous pression, et avec un gicleur de projection, tandis que le dispositif de dosage (7) est réalisé sous la forme d'un pointeau d'injection du gicleur de projection (6) et présente au moins un pointeau creux (31) qui est déplaçable en longueur par rapport au gicleur de projection (6), de sorte que les composants du matériau sont amenés à travers la face extérieure ou intérieure du pointeau creux (31) et sont émis sous forme d'écoulements concentriques et coaxiaux de matériau au gicleur de projection (6), tandis que le dispositif de dosage (7) présente en outre un pointeau de dosage (32) déplaçable en longueur par rapport au pointeau creux (31), de manière à amener une quantité constante des composants du matériau au gicleur de projection (6), et qui est pivotable par rapport au pointeau creux (31) à afin de régler la quantité amenée au gicleur de projection (6).

2. Pistolet selon la revendication 1, **caractérisé en ce que** les dispositifs de raccordement (2,3) sont disposés en position fixe sur le boîtier et à écart mutuel dans la direction d'extraction et sont réalisés de manière telle que les réservoirs sous pression (4,5) munis d'une pièce de raccordement (18) sont vissés dans les dispositifs de raccordement, ce qui ouvre simultanément la valve.

3. Pistolet selon la revendication 2, **caractérisé en ce que** les réservoirs sous pression (4, 5) ressortent du boîtier suivant la même direction.

4. Pistolet selon la revendication 2, **caractérisé en ce que** les réservoirs sous pression (4, 5) ressortent du boîtier suivant des directions opposés.

5. Pistolet selon les revendications 2-4, **caractérisé en ce qu'**une poignée (11) est prévue sur le boîtier (1).

6. Pistolet selon les revendications 2-4, **caractérisé en ce qu'**un réservoir sous pression (4, 5) est réalisé sous la forme d'une poignée.

7. Pistolet selon l'une des revendications 3 ou 4, **caractérisé en ce que** les réservoirs sous pression (4, 5) sont situés dans le même plan.

8. Pistolet selon l'une des revendications 3 ou 4, **caractérisé en ce que** les réservoirs sous pression (4, 5) et la poignée (11) débordent du boîtier (1) suivant des directions opposées, et **en ce que** les réservoirs sous pression (4, 5) et la poignée (11) sont situés dans le même plan.

9. Pistolet selon la revendication 2, **caractérisé en ce qu'**un clapet anti-retour (16, 16') est prévu dans les dispositifs de raccordement (2, 3).

10. Pistolet selon la revendication 1, **caractérisé en ce que** les réservoirs sous pression (4, 5) sont des boîtes à deux chambres.

11. Pistolet selon la revendication 1, **caractérisé**

**en ce que** le pointeau creux (31) est doté dans sa partie extrême une pièce de fermeture (33) qui repose contre le gicleur de projection (6) et possède un alésage, et **en ce que** le pointeau de dosage (32) présente sur sa partie extrême un prolongement (39) qui s'insère dans l'alésage de la pièce de fermeture (33).

12. Pistolet selon la revendication 11, **caractérisé en ce que** la pièce de fermeture (33) est constituée d'un matériau rigide ou élastiquement déformable.

13. Pistolet selon la revendication 1, **caractérisé en ce que** le pointeau de dosage (32) possède au moins une rainure (55) de forme ondulée qui s'étend sur une distance donnée depuis l'extrémité du pointeau de dosage (32) et qui forme un canal destiné à l'amenée d'un des composants du matériau, et **en ce que** le pointeau creux (31) présente au moins une ouverture (54) qui s'étend radialement sur au moins une paroi du pointeau creux (31) et qui est destinée à introduire les composants du matériau dans le canal du pointeau de dosage.

14. Pistolet selon la revendication 13**, caractérisé en ce que** le pointeau creux (31) présente plusieurs ouvertures (54) disposées sur une rangée (figure 4).

15. Pistolet selon la revendication 13, **caractérisé en ce qu'**est formée une section plane (57) qui s'étend sur une distance donnée suivant la longueur du pointeau de dosage (32), **en ce que** le pointeau de dosage (32) est disposé dans le pointeau creux (31) de telle manière que la section plane (57) soit disposée en-dessous de l'orifice (54), et **en ce que** le pointeau de dosage (32) est disposé de manière à pouvoir tourner dans le pointeau creux (31) afin de modifier en vue du contrôle du débit de passage la petite largeur de l'ouverture (54) au moyen des bords formés par la section plane (57) sur la périphérie du pointeau de dosage (32).

16. Pistolet selon la revendication 1, **caractérisé par** un dispositif d'actionnement (34) destiné à déplacer ensemble d'une position de repos en une position de travail le pointeau creux (31) et le pointeau de dosage (32), et **par** un premier et un second mécanisme de réarmement destiné replacer individuellement le pointeau creux (31) et le pointeau de dosage (32) depuis la position de travail vers la position de repos.

17. Pistolet selon la revendication 16**, caractérisé**

**en ce que** le dispositif d'actionnement (34) présente un levier de traction (61) disposé de manière pivotable sur la section (10) du boîtier et des moyens (63, 64; 65, 66), destinés à transformer le déplacement pivotant du levier de traction (61) en un déplacement linéaire des pointeaux, de telle manière que la longueur du déplacement longitudinal du pointeau de dosage (32) soit plus grande que celle du pointeau creux (31).

18. Pistolet selon la revendication 17, **caractérisé en ce que** les moyens sont réglables de manière à régier les longueurs des déplacements longitudinaux du pointeau creux (31) et du pointeau de dosage (32).

19. Pistolet selon la revendication 18, **caractérisé en ce que** les moyens sont réglables afin de pouvoir déplacer avec décalage latéral le pointeau creux (31) et le pointeau de dosage (32).

20. Pistolet selon la revendication 16, **caractérisé en ce qu'**à l'extrémité arrière de la section (10) du boîtier est disposée une graduation (79) destinée à indiquer la position du dispositif de dosage (7) par rapport au gicleur de projection (6).

21. Pistolet selon la revendication 1**, caractérisé en ce que** le premier et le second mécanisme de réarmement présentent un ressort (74, 78) qui replacent respectivement le pointeau creux (31) et le pointeau de dosage (32) en position de repos.

22. Pistolet selon la revendication 1, **caractérisé par** un collecteur (81) inséré sur le gicleur de projection (6) et formant une chambre de mélange (82) élargie.

23. Pistolet selon la revendication 22, **caractérisé en ce que** le collecteur (81) est doté sur sa périphérie d'entailles (83) qui forment un emplacement de future rupture afin d'indiquer un bouchage du collecteur (81).

24. Pistolet selon la revendication 22, **caractérisé en ce que** le collecteur (81) est un manchon en matière synthétique.

*Fig. 1*

Fig. 2

Fig. 3

Fig. 4

Fig. 5